# EUROPEAN PATENT SPECIFICATION

(11) **EP 2 119 583 B1**
(45) Date of publication and mention of the grant of the patent: **11.07.2012**
(21) Application number: 08704480.6
(22) Date of filing: 06.02.2008
(51) Int. Cl.: B60H 3/02, B05B 5/025, B05B 5/057

(54) **AIR CONDITIONING APPARATUS FOR VEHICLE**
LUFTKLIMATISIERUNGSVORRICHTUNG FÜR FAHRZEUG
APPAREIL DE CONDITIONNEMENT D'AIR POUR VÉHICULE

(30) Priority: 07.02.2007 JP 2007028134; 07.02.2007 JP 2007028136
(43) Date of publication of application: 18.11.2009
(73) Proprietor: Calsonic Kansei Corporation, Saitama-shi Saitama 331-8501 (JP)
(72) Inventor: SUEMATSU, Nobuyasu c/o CALSONIC KANSEI CORPORATION, Saitama 331-8501 (JP); SOMA, Hiroshi c/o CALSONIC KANSEI CORPORATION, Saitama 331-8501 (JP)
(74) Representative: Köhler, Walter
(86) International application number: PCT/JP2008/051909
(87) International publication number: WO 2008/096770

(56) References cited:
- WO-A1-2005/042171
- JP-A- 06 115 347
- JP-A- 62 155 122
- JP-A- 2005 131 549
- JP-A- 2006 151 046
- JP-A- 2006 300 485
- JP-U- 62 187 915
- US-A- 4 340 112

## Description

### TECHNICAL FIELD

The present invention relates to an air conditioning apparatus for a vehicle including a device to generate electrified fine particulate water.

### BACKGROUND ART

It is conventionally known to generate electrified fine particulate water having a minute particle diameter of about one nanometer through tens of nanometers, which is referred to as nano-ion mist by applying a voltage to plus and minus electrodes of an electrified fine particulate water generation device, as disclosed in JP2006-131549A.

In this case, it is usual to provide an exclusive blast fan in order to discharge the generated electrified fine particulate water, as disclosed in JP2005-131549A.

In addition, in JP2005-131549, it is described to use dew condensation water generated by cooling the electrodes through a Peltier device which is a thermoelectric conversion device in order to eliminate a constitution in which water is continuously supplied by a water tank, when the water is supplied to the electrified fine particulate water generation device.

JP 2006-151046 discloses an apparatus according to the preamble of claim 1.
When the electrodes are cooled by the Peltier device, heat is released using a heat releasing fin. However, it is necessary to supply wind to the heat releasing fin by use of the blast fan.

### DISCLOSURE OF THE INVENTION

However, in an apparatus as disclosed in JP2005-131549A as mentioned above, in which an exclusive blast fan is used, there is a problem that a large sized blast fan is required to be used for obtaining a predetermined wind quantity, and therefore a structure thereof becomes complex and the entire apparatus becomes a large size.

In particular, in the case where the exclusive blast fan is used for an air conditioning apparatus for vehicle, because there is a limitation to a space for disposing the electrified fine particulate water generation device, it is necessary for the air conditioning apparatus for vehicle to be miniaturized.

Therefore, an object of the present invention is to provide an air conditioning device for a vehicle that includes an electrified fine particulate water generation device having no an exclusive blast fan.

To accomplish the above object, an air conditioning apparatus according to an embodiment of the present invention includes an air conditioning unit having a heat exchanger, a fan that sends air to the air conditioning unit, a duct to guide the air passing through the air conditioning unit into a vehicle room and an electrified fine particulate water generation device. A housing part is attached to an opening part disposed on a wall surface of the duct. The housing part includes an intake opening connected to an upstream side of the duct and a discharge opening connected to a downstream side of the duct. An electrified fine particulate water generation part of the electrified fine particulate water generation device is disposed inside the housing part.

Preferably the electrified fine particulate water generation part is disposed in a circuitous path connecting the intake opening and the discharge opening. A heat releasing fin as a thermoelectric conversion device is disposed inside the duct and supplies moisture content in the air to the electrified fine particulate water generation part.

Preferably, the housing part includes a Venturi path that connects the intake opening and the discharge opening via a throat part, a generation path that takes in air from a differing part with the opening part and a heat releasing path in which the following constitution can be adopted. That is, the electrified fine particulate water generation part is disposed in the generation path. A downstream side of the generation path is connected to a vicinity of the throat part of the Venturi path. A heat releasing fin as the thermoelectric conversion device is disposed in the heat releasing path. The heat releasing fin supplies moisture content in the air to the electrified fine particulate water generation part. A downstream side of the heat releasing path can be connected to an internal part of the duct.

### BRIEF DESCRIPTION OF THE DRAWINGS

FIG. 1 is a schematic diagram illustrating a constitution about a vicinity of a housing part of an air conditioning apparatus for a vehicle according to a first embodiment of the present invention.
FIG. 2 is a perspective view illustrating an entire constitution of the air conditioning apparatus for the vehicle according to the first embodiment of the present invention.
FIG. 3 is a schematic diagram illustrating a constitution of an electrified fine particulate water generation device used for the air conditioning apparatus for the vehicle according to the first embodiment of the present invention.
FIG. 4 is a schematic diagram illustrating a constitution of a vicinity of a housing part of an air conditioning apparatus for a vehicle according to a second embodiment of the present invention.
FIG. 5 is a perspective view illustrating an approximate constitution of the air conditioning apparatus for the vehicle according to the second embodiment of the present invention.
FIG. 6 is a perspective view illustrating an entire constitution of the air conditioning apparatus for the vehicle according to a third embodiment of the present invention.
FIG. 7A is a schematic diagram illustrating a constitution of an electrified fine particulate water generation device used for the air conditioning apparatus for the vehicle according to the third embodiment of the present invention and specifically, a perspective view of a dismantled state.
FIG. 7B is a schematic diagram illustrating a constitution of an electrified fine particulate water generation device used for the air conditioning apparatus for the vehicle according to the third embodiment of the present invention and specifically, a perspective view of a completed state.
FIG. 8 is a perspective view illustrating a constitution of an electrified fine particulate water generation part of an electrified fine particulate water generation device used for the air conditioning apparatus for the vehicle according to the third embodiment of the present invention.
FIG. 9 is a cross sectional diagram of the electrified fine particulate water generation device viewed from a direction of arrow A-A of FIG. 7B.
FIG. 10A is a schematic diagram illustrating a constitution of a fan used for the air conditioning apparatus for the vehicle according to the above described third embodiment and specifically, a cross sectional diagram illustrating a mounting position of a heat releasing fin.
FIG. 10B is a schematic diagram illustrating a constitution of a fan used for the air conditioning apparatus for the vehicle according to the above described third embodiment and specifically, a perspective view illustrating an opening and closing lid.
FIG. 11 is a schematic diagram illustrating a connecting position of the electrified fine particulate water generation device used for the air conditioning apparatus for the vehicle of the above described third embodiment.
FIG. 12 is a schematic diagram illustrating a connecting position of an electrified fine particulate water generation device used for an air conditioning apparatus for a vehicle according to a fourth embodiment of the present invention.

### BEST MODE FOR CARRYING OUT THE INVENTION

A best mode of the present invention will be described in detail hereinafter with reference to the accompanying drawings with regard to several embodiments specifying this mode.

### [First Embodiment]

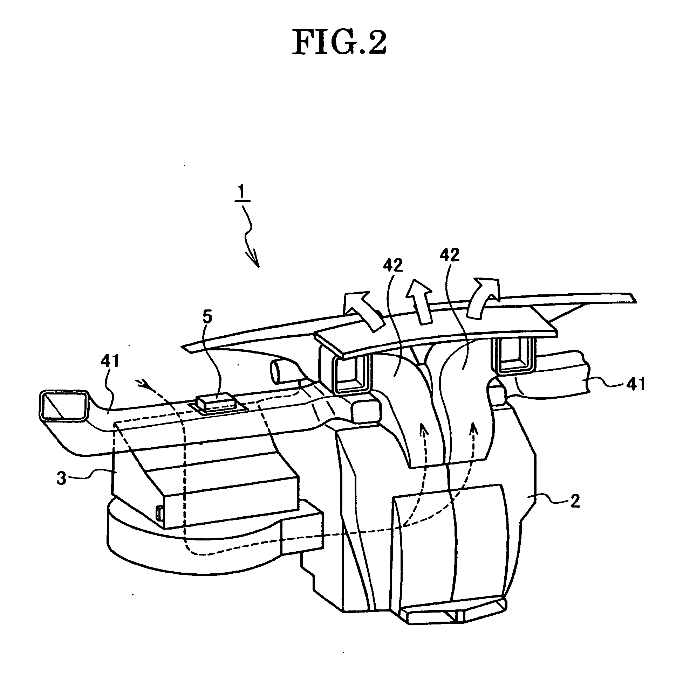

First, with regard to FIG. 2, an air conditioning apparatus for a vehicle according to a first embodiment of the present invention is described.

As illustrated in FIG. 2, the air conditioning apparatus 1 for the vehicle in the first embodiment includes a fan 3, an air conditioning unit 2 provided with a heat exchanger for heating and cooling air wind propelled from the fan 3, side vent ducts 41 as well as center vent ducts 42 as ducts for discharging the cooled air into a vehicle room.

The fan 3 includes an internal and external air introduction part (not illustrated) that takes in air internal and external to the vehicle room, a filter (not illustrated) to filter air and also, wind propelling blades (not illustrated). The fan 3 is a so called sirocco fan type. Therefore, a high static pressure can be secured when supplying wind and it is characteristic that a certain wind propelling quantity can be secured even when a high static pressure is applied.

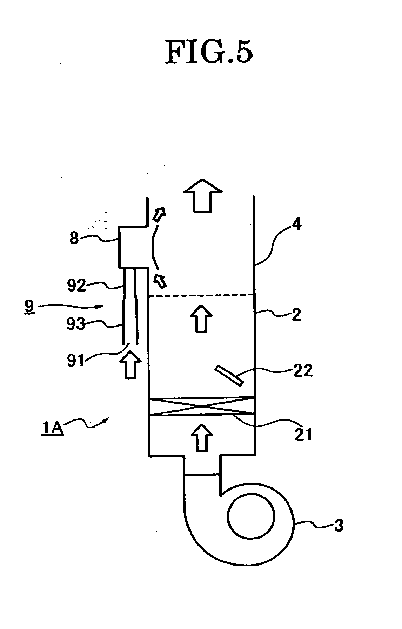

In addition, inside the air conditioning unit 2, as illustrated in FIG. 5, an evaporator 21 and a heater 22 are disposed as heat exchangers for cooling and heating the air wind propelled from the fan 3 so that the air can be mixed at a mix chamber and adjusted to an optimum temperature to be wind propelled towards a vehicle room side.

Furthermore, as illustrated in FIG. 2, the side vent ducts 41 as well as the center vent ducts 42 connect an air outlet of the air conditioning unit 2 with an interior of the vehicle room so that the air adjusted to an optimum temperature at the air conditioning unit 2 can be efficiently introduced into the vehicle room. The side vent ducts 41 as well as the center vent ducts 42 have a predetermined cross sectional area and are provided with a smooth inner surface.

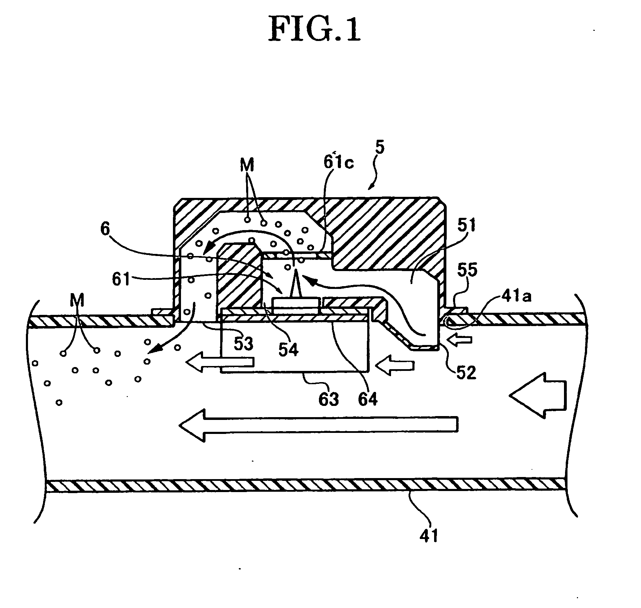

As illustrated in FIG. 1 and FIG. 2, in the air conditioning apparatus 1 for the vehicle of the present embodiment, an opening part 41a is provided in an upper wall surface of one of the side vent ducts 41. A housing 5 mounted with an electrified fine particulate water generation device 6 is attached to the opening part 41a.

A lower end of the housing part 5 is formed with an approximately same shape to a planar view shape of the opening part 41a to be fitted on the opening part 41a. A thrown out ledge part 55 is constituted in a periphery of the lower end to engage a periphery of the opening part 41a. The opening part 41a of the side vent duct 41 is closed by attaching the housing part 5.

In addition, in the housing part 5, as illustrated in FIG. 1, a circuitous path 51 is formed to tortuously connect an intake opening 52 and a discharge opening 53.

The intake opening 52 is provided to be protruded towards an internal part of the side vent duct 41 and opens towards an upstream side (a side of the air conditioning unit 2). A surface of the opening is approximately orthogonal to a direction of air flow (a direction of a white arrow of FIG. 1) within the side vent duct 41.

In addition, the discharge opening 53 is configured to open towards a center of a cross section of the side vent duct 41. A surface of the opening is approximately parallel to the direction of air flow (the direction of the white arrow of FIG. 1) within the side vent duct 41.

Furthermore, the circuitous path 51, for example, as illustrated in FIG. 1, extends from the intake opening 52 toward the side vent duct 41 outwardly and is bent. After extending approximately parallel to a stretching direction of the side vent duct 41, the circuitous path 51 is bent at an opening 54 for attachment of the later described electrified fine particulate water generation device 6 and again extends outwardly. Hereby the circuitous path 51 is formed to turn back towards the discharge opening 53.

An opening connecting the circuitous path 51 and the internal part of the side vent duct 41 is formed as the opening 54 for attachment disposed midst the circuitous path 51. The opening 54 for attachment is used for attaching the electrified fine particulate water generation device 6.

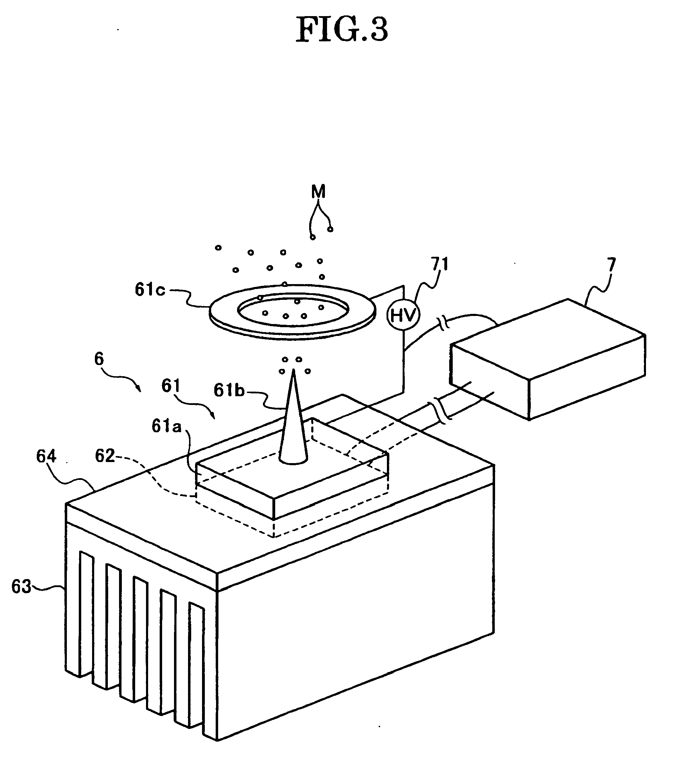

The electrified fine particulate water generation device 6, as illustrated in FIG. 3, is mainly constituted from an electrified fine particulate water generation part 61 for generating electrified fine particulate water M, a Peltier device as a thermoelectric conversion device which supplies moisture content in the air to the electrified fine particulate water generation part 61, a heat releasing fin 63 for cooling the Peltier device and an insulating plate 64 for sealing the opening 54 for attachment.

The electrified fine particulate water generation part 61 is mainly constituted from a plate shaped discharge electrode 61a having a water carrier part 61b protruded therefrom, an opposite electrode 61c disposed at a position separated from a tip edge of the water carrier part 61b.

The discharge electrode 61a is disposed on an upper surface side of the insulating plate 64, formed to have a rectangular shape as viewed in plan and made of a metal of aluminum or the like.

In addition, the water carrier part 61b is disposed at an approximate center of the discharge electrode 61a to be protruded therefrom and formed to have a conical shape using porous materials of ceramic or the like so that dew-condensed water moves to the tip edge by capillarity.

Furthermore, the opposite electrode 61c is worked to an annular disk shape disposed with concentric circle shaped holes by metals or the like.

The discharge electrode 61a and the opposite electrode 61c are connected to a high voltage impressing part 71 receiving power supply from an electrical power control part 7. A high voltage is applied in a way that a side of the discharge electrode 61a becomes a minus electrode.

The Peltier device 62 having an approximate same shape as viewed in planar as the discharge electrode 61a is disposed to come into contact with a back surface of the discharge electrode 61a. A heat releasing fin 63 is mounted on a back surface of the Peltier device 62.

The Peltier device 62 is formed into a plate shape by joining two kinds of metals. When electrical current is applied from the electrical power control part 7 to a joining part of the two kinds of metals, a Peltier effect is present in which heat moves one the metal to the other. The Peltier device is a plate shaped semiconductor device that utilizes such Peltier effect. In the Peltier device of the present embodiment, a side that comes into contact with the discharge electrode 61a is formed to be a heat absorbing part, the other side that comes into contact with the heat releasing fin 63 is formed to be a heat releasing part.

In addition, a rectangular shaped opening that connects the side of the discharge electrode 61a and a side of the heat releasing fin 63 with the Peltier device 62 housed therein is disposed in the insulating plate 64.

On one hand, the heat releasing fin 63 is made of a metal of aluminum or the like. As illustrated in FIG. 3, a plurality of approximate parallel thin plate shaped blades is disposed on one surface side of a plate shaped base part of the heat releasing fin 63 to be protruded therefrom so that a surface area thereof becomes large and the heat releasing fin 63 is formed to be able to perform heat exchange efficiently.

In order for each of the thin plate shaped blades of the heat releasing fin 63 to be wind propelled uniformly, as illustrated in FIG. 1, a surface of each of the blade is shaped to be parallel to a direction of air flow. The heat releasing fin 63 is disposed to be protruded from the opening 54 for attachment towards the internal part of the side vent duct 41.

On the other hand, when the heat releasing fin 63 is mounted on the opening 54 for attachment in such a direction, the electrified fine particulate water generation part 61 is disposed to protrude therefrom towards an internal part of the circuitous path 51.

In addition, a portion of the air flowing in the internal part of the side vent duct 41 is taken in from the intake opening 52 of the circuitous path 51 to be supplied to the electrified fine particulate water generation part 61 and carried together with the electrified fine particulate water M generated thereof to the discharge opening 53 so that the electrified fine particulate water M is discharged to the internal part of the side vent duct 41.

Next, operations of the air conditioning apparatus 1 for the vehicle of the above embodiment are described.

In the air conditioning apparatus 1 for the vehicle of the above described constitution, as illustrated in FIG. 1, the housing part 5 is attached to the opening part 41a disposed in the upper wall surface of the side vent duct 41. The electrified fine particulate water generation part 61 of the electrified fine particulate water generation device 6 is disposed in the internal part of the circuitous path 51 of the housing part 5.

The housing part 5 includes an intake opening 52 and a discharge opening 53 respectively connected to an upstream side and a downstream side of the side vent duct 41. Air can be taken into the circuitous path 51 by utilizing air flows in the internal part of the side vent duct 41 and pressure force differences between the intake opening 52 and the discharge opening 53.

Therefore, an exclusive blast fan is not disposed. However, the electrified fine particulate water M is discharged to the internal part of the side vent duct 41 and can be discharged into the vehicle room therefrom.

That is, when air is taken in from the intake opening 52, air flow until the discharge opening 53 is formed along the circuitous path 51.

The circuitous path 51 is tortuous. Air flows at a speed differing from a wind velocity of the internal part of the side vent duct 41.

In addition, air containing moisture content flows into the electrified fine particulate water generation part 61 and passes through a hole at a center of the opposite electrode 61c. At this moment, electrified fine particulate water M sprayed in a mist state between the water carrier part 61b and the opposite electrode 61c is mixed.

Air flow is formed in one direction of the circuitous path 51. Air passing therethrough does not stay or back flow. Therefore, electrified fine particulate water M sprayed in a mist state from the water carrier part 61b can be efficiently attracted.

Hereby a generation mechanism of the electrified fine particulate water M is approximately described.

First, by being energized by the Peltier device 62 as illustrated in FIG. 3, a surface of the Peltier device 62 facing the discharge electrode 61a is cooled so that the discharge electrode 61a coming into contact with the Peltier device 62 is cooled. As a result, dew-condensed water is generated on the surface of the discharge electrode 61a.

The bedewing water is carried by capillarity from an elementary part to a tip edge part of the water carrier part 61b disposed on the discharge electrode 61a to be projected therefrom.

In addition, condensed water carried to the tip edge part of the water carrier part 61b becomes the electrified fine particulate water M sprayed towards the opposite electrode 61c from a sharp tip edge part of the water carrier part 61b by a high voltage impressed between the discharge electrode 61a and the opposite electrode 61c

Hereby, in order to generate the bedewing water, heat release is performed by the heat releasing fin 63 disposed to come into contact with the back surface of the Peltier device 62. As illustrated in FIG. 1, the heat releasing fin 63 is protruded to the internal part of the side vent duct 41. Therefore, a wind quantity necessary for cooling the heat releasing fin 63 can be obtained even when an exclusive blast fan is not disposed.

That is, because the heat releasing fin 63 is protruded from the opening part 41a towards the internal part of the side vent duct 41, a sufficient quantity of wind can be wind propelled to the heat releasing fin 63 so that the air does not stay or back flow and heat release can be performed efficiently.

In addition, by cooling the heat releasing fin 63, through a heat releasing surface of the Peltier device 62 that comes into contact with a front surface side of the heat releasing fin 63, heat release of the Peltier device 62 is facilitated and heat exchange can be performed more efficiently.

As mentioned above, the air containing electrified fine particulate water M in such a way, as illustrated in FIG. 1, is discharged into the internal part of the side vent duct 41 from the discharge opening 53 of the circuitous path 51.

Then air discharged into the side vent duct 41 is eventually discharged into the vehicle room to accomplish sterile filtrate and odor elimination in the vehicle room.

The electrified fine particulate water M discharged from the electrified fine particulate water generation device 6 has little attenuations due to time lapse. Therefore, the electrified fine particulate water M discharged into the vehicle room from an outlet of the side vent duct 41 can be diffused to the entire vehicle room.

In addition, if the electrified fine particulate water generation device 6 is disposed in a duct close to the vehicle room such as the side vent duct 41, attenuations in the internal part of the air conditioning device 1 for the vehicle can be suppressed to a minimum.

Furthermore, if a constitution is adopted in which a housing part 5 is directly mounted to the opening part 41a of a duct such as the side vent duct 41 or the like, easy installation is possible for air conditioning apparatuses of various states without much modifications.

That is, if the electrified fine particulate water generation device 6 is mounted to the opening 54 for attachment of the housing part 5, it is only necessary to attach the housing part 5 to the opening part 41a open at the upper wall surface of the side vent duct 41. Disposition of the electrified fine particulate water generation device 6 is thereby complete.

In such a way, in the air conditioning apparatus 1 of the present embodiment, a wind quantity and a wind speed sufficient to discharge the electrified fine particulate water M can be obtained by a simple constitution in which an exclusive blast fan is not disposed.

In addition, the housing part 5 is disposed in an external part of the side vent duct 41. Therefore, there is no limitation to shapes thereof and an easily moldable shape can be adopted.

### [Second Embodiment]

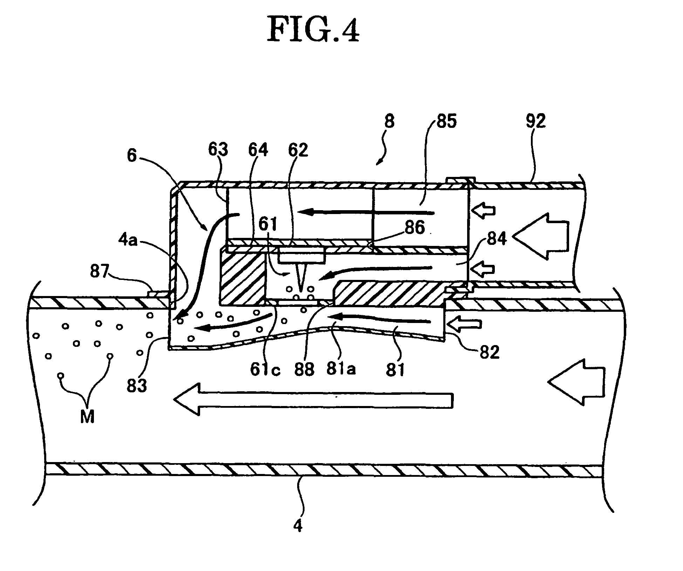

An air conditioning apparatus for a vehicle according to a second embodiment of the present invention is described hereinafter with reference to FIG. 4 and FIG. 5. In addition, descriptions of parts with the same or equivalent content to the previous embodiment are described using the same numerals.

An air conditioning apparatus 1A for a vehicle in the second embodiment not only utilizes air flowing in an internal part of the side vent duct 41 as illustrated in the first embodiment but also utilizes air from other parts.

The air conditioning apparatus 1A, as illustrated in FIG. 5 includes a fan 3, an air conditioning unit 2 provided with a heat exchanger for heating and cooling air wind propelled from the fan 3, side vent ducts as well as center vent ducts or the like as a duct 4 for discharging the cooled air into a vehicle room.

In an internal part of the air conditioning unit 2, an evaporator 21 and a heater 22 are disposed. Air wind propelled from the fan 3 is cooled and heated to be mixed at a mix chamber so that the air can be adjusted to an optimum temperature and wind propelled into the vehicle room.

On one hand, on a wall surface of the duct 4, an opening part 4a as illustrated in FIG. 4 is disposed. A housing part 8 mounted with the electrified fine particulate water generation device 6 is attached to the opening part 4a.

A lower end of the housing part 8 of the present embodiment is formed with an approximately same shape to a plan-view shape of the opening part 4a to be fitted on the opening part 4a. A thrown out ledge part 87 is provided in a periphery of the lower end to engage a periphery of the opening part 4a.

In the housing part 8, as illustrated in FIG. 4, a Venturi path 81 is formed to connect an intake opening 82 and a discharge opening 83.

A throat part 81a having a cross section smaller than cross sections of the intake opening 82 and the discharge opening 83 at both ends of a flow path is formed as the Venturi path 81. A wind speed passing through the Venturi path 81a is faster than a wind speed during intake at the intake opening 82. Therefore, from Bernoulli's theorem, a pressure of the throat part 81a becomes low.

On the other hand, a surface of the housing part 8 at a downstream side of the air flow of the duct 4 is open for air intake from parts differing to the opening part 4a.

At the opening, a generation path 84 with the electrified fine particulate water generation part 61 disposed therein is connected to a heat releasing path 85 disposed with a heat releasing fin 63 of the Peltier device 62. The Peltier device 62 is configured to supply moisture content in the air to the electrified fine particulate water generation part 61.

The generation path 84, after extended in an approximately parallel way in a stretching direction of the duct 4, is bent at an opening 86 for attachment of the electrified fine particulate water generation device 6 to be connected to a downstream side of the throat part 81a of the Venturi path 81.

In addition, the heat releasing path 85 is formed in a separate path with the generation path 84 and connected to the discharge opening 83 of the Venturi path 81.

In addition, the electrified fine particulate water generation device 6 is mounted to the opening 86 for attachment in such a way that the electrified fine particulate water generation part 61 is disposed in the generation path 84, and the heat releasing fin 63 is disposed in the heat releasing path 85.

At this moment, an opposite electrode 61c of the electrified fine particulate water generation part 61 is disposed at a connection opening 88 between the Venturi path 81 and the generation path 84. In addition, the opening 86 for attachment is closed by an insulating plate 64 of the electrified fine particulate water generation device 6. Pathways of the generation path 84 and the heat releasing path 85 are separated.

In addition, by the aforementioned Bernoulli's theorem, air from the generation path 84 can easily flow into the throat part 81a of a low pressure so that an air flow stronger than the heat releasing path 85 can be formed.

Hereby as illustrated in FIG. 5, a small diameter pipe 92 of an aspirator 9 is connected to the generation path 84 and the heat releasing path 85.

The aspirator 9 is necessary for an air conditioning device that performs automatic temperature adjustment. Air within the vehicle room is guided into an intake opening 91 for internal air using Bernoulli's theorem. A sensor for temperature detection (not illustrated) disposed in the internal part detects temperatures within the vehicle room.

In addition, the aspirator 9 is formed to have a pipe line shape by a large diameter pipe 93 of a side of the intake opening 91 for internal air and a small diameter pipe 92 connected therewith. The aspirator 9 incorporates air inside the vehicle room from the intake opening 91 of the internal air disposed for example, at a side or the like of a steering of an instrument panel.

Therefore, by connecting end parts of the generation path 84 and the heat releasing path 85 to the aspirator 9, air can be taken in from a part differing to the duct 4

Then, by the air taken in from the aspirator 9, generation of the electrified fine particulate water M is performed at the generation path 84 and cooling of the heat releasing fin 63 is performed at the heat releasing path 85.

Next, operations of the above described air conditioning apparatus 1A are described.

In the air conditioning apparatus 1A constituted as above, air flowing in the internal part of the duct 4 is taken in from an intake opening 82 to form an air flow in the Venturi path 81.

On the other hand, air is taken in from the aspirator 9. The air is made to flow into the generation path 84 disposed with the electrified fine particulate water generation part 61 and the heat releasing path 85 disposed with the heat releasing fin 63.

By connecting the generation path 84 to a downstream side of the throat part 81a of the Venturi path 81, electrified fine particulate water M generated at the generation path 84 keeps up with the air flow of the Venturi path 81 to be discharged from the discharge opening 83.

That is, the generation path 84 is connected to a vicinity of the throat part 81a at which wind velocity of the Venturi part 81 becomes fastest. The electrified fine particulate water M having flowed into the Venturi path 81 from the connection opening 88 of the generation path 84 can be efficiently carried to the discharge opening 83.

By disposing the Venturi path 81 in such a way, without being largely affected by the wind velocity or static pressure of the internal part of the duct 4, air flow of a quantity necessary for discharging the electrified fine particulate water M can be formed.

In addition, air that flows to the generation path 84 and the heat releasing path 85 can be secured from a part other than the opening part 4a of the duct 4 so that a wind quantity can be secured without being largely affected by the wind quantity or static pressure of the internal part of the duct 4.

Furthermore, because air flowing in the internal part of the duct 4 is air dehumidified by the evaporator 21, by taking-in air containing more moisture content than that and flowing the air into the generation path 84, condensed water is generated certainly and a state is easily maintained to possibly continuously generate the electrified fine particulate water M.

In addition, other constitutions and operational effects of the air conditioning apparatus for the vehicle according to the second embodiment of the present invention are abbreviated for description because they are approximately the same to the air conditioning apparatus for the vehicle according to the first embodiment.

### [Third Embodiment]

Next, an air conditioning apparatus for a vehicle according to the third embodiment of the present invention is described.

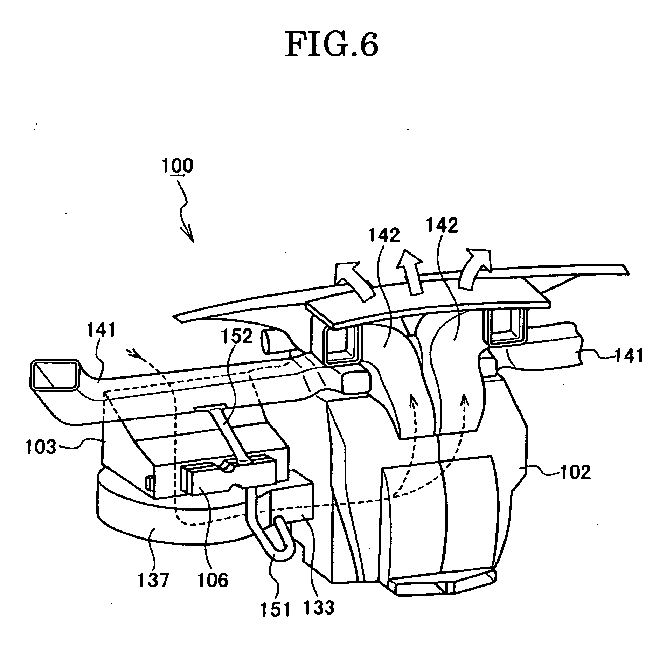

As illustrated in FIG. 6, the air conditioning apparatus 100 of the third embodiment includes a fan 103, an air conditioning unit 102 that includes a heat exchanger for heating and cooling air wind propelled from the fan 103, side vent ducts 141 and 141 and center vent ducts 142 and 142 that discharges into the vehicle room air heated and cooled at the air conditioning unit 102.

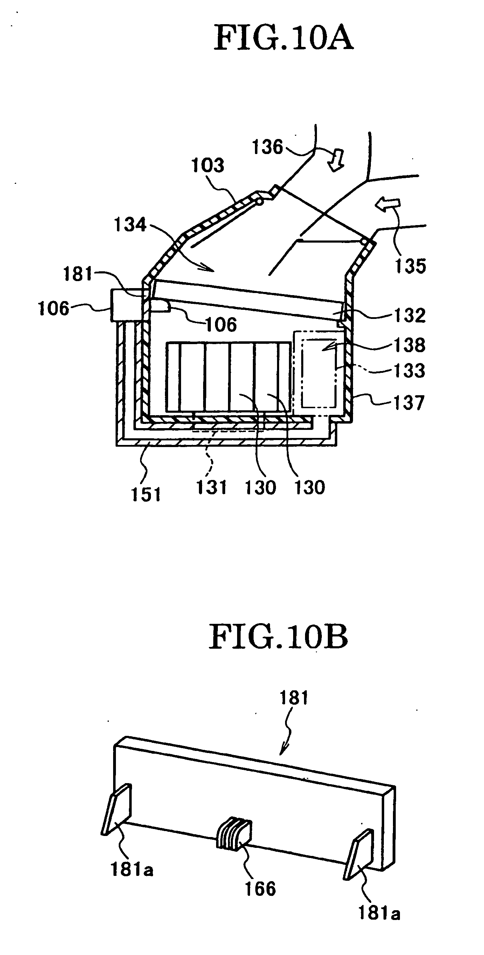

The fan 103, as illustrated in FIG. 10A, includes an internal and external air introduction part 134 that introduces internal air 135 within the vehicle room and external air 136 outside the vehicle room, a filter 132 that filtrate air having passed through the internal and external air introduction part 134, wind propelling blades 130 rotated by a wind propelling motor 131 and etc., a scroll casing 137 that houses the wind propelling blades 130 and the etc. as well as a wind propelling path 133 that sends air urged by the rotating wind propelling blades 130 and the etc. to the air conditioning unit 102.

The internal and external air introduction part 134 is connected to a duct (not illustrated) going in and out of the vehicle room. The introduction part 134 can introduce the internal air 135 or the external air 136 or mixed air of the internal and external air.

In addition, the filter 132 is disposed downstream of the internal and external air introduction part 134 to remove powder dust, pollen and exhaust gas of the air to be introduced.

In addition, the wind propelling blades 130 and etc. are disposed at an equal distance from a rotating shaft. The wind propelling blades 130 are so called sirocco fan type that rotates with a cylindrical shaped constitution. The blast fan 130 and etc. is formed to be able to urge the air in a radial fashion by a centrifugal force from between the wind propelling blades 130 and etc..

In addition, because the fan 103 is a sirocco fan type, a high static voltage can be secured when propelling wind, in addition, a constant wind propelling quantity can be secured even when a high static voltage is operative.

Furthermore, the scroll casing 137 has a circular shaped cross section. The scroll casing housing the wind propelling blade 130 and etc. is disposed at an opening 138 connected to a wind propelling path 133 in a part of a cross section of a side of the air conditioning unit 2.

As illustrated in FIG. 6 and FIG. 10A, the wind propelling path 133 is disposed adjacent to the wind propelling blade 130 and etc. and formed to be able to send air to the air conditioning unit 102 without damaging a static pressure of the air having a high static pressure.

In addition, with regard to a cross sectional shape of the wind propelling path, a height of up and down directions of the vehicle are formed to be approximately the same to the wind propelling blade 130 and etc., a width of front and rear directions of the vehicle are formed to be approximately the same to a width of the opening 138 disposed on the scroll casing 135.

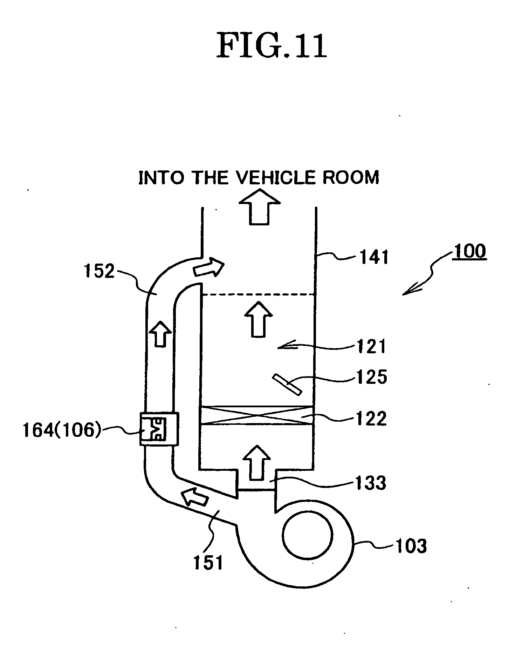

In addition, the air conditioning unit 102, as illustrated in FIG. 11, includes in the internal part thereof an evaporator 122 and a heater 125 as heat exchangers. Air wind propelled from the fan 103 is cooled, heated and mixed at a mix chamber 121 so that the air can be adjusted to an optimum temperature and wind propelled into the vehicle room.

Furthermore, as illustrated in FIG. 6, the side vent ducts 141 and 141 as well as the center vent ducts 142 and 142, in order to introduce efficiently into the vehicle room air adjusted to an optimum temperature at the air conditioning unit 102, connects an air outlet of the air conditioning unit 102 with vehicle room interior and are formed with a predetermined cross sectional area to have a smooth internal surface.

As illustrated in FIG. 6, in the air conditioning apparatus 100 for the vehicle of the present embodiment, a pipe conduit 151 of an upstream side is connected as a circuitous path to a side surface of the wind propelling path 133 in the vicinity of wind propelling blades 130 and etc. The pipe conduit 151 is connected to the side vent duct 141 via the electrified fine particulate water generation device 106 and a pipe conduit 152 of a downstream side.

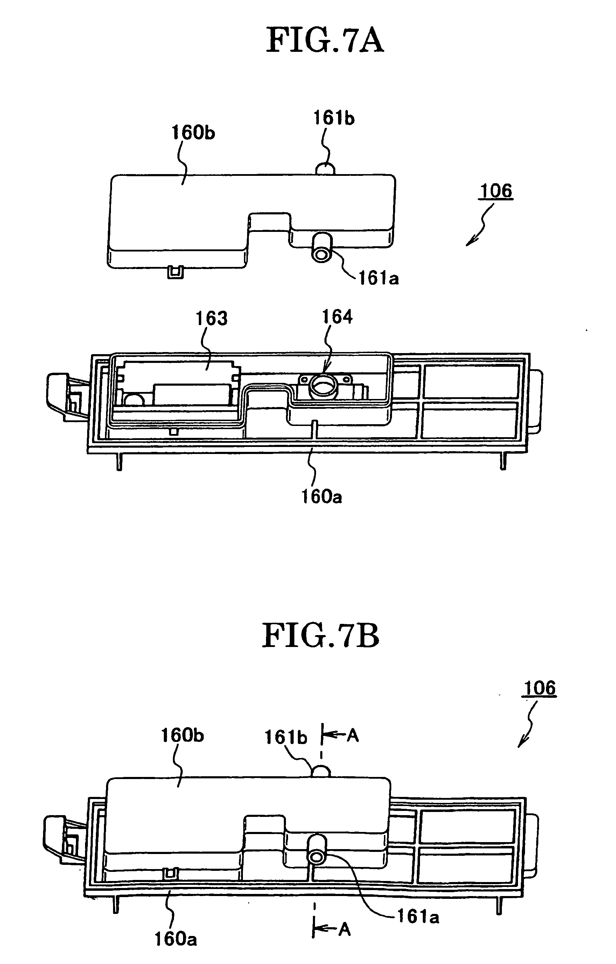

The pipe conduit 151 of the upstream side is formed, for example, by a hose of an internal diameter ϕ of 16 mm or the like. One end thereof is connected to a mounting hole disposed in a side surface of the wind propelling path 133. Another end thereof is connected to an air intake opening 161a of the electrified fine particulate water generation device 106 (refer to FIG. 7A).

In addition, the pipe conduit 151 at the upstream side may be formed integrally with the fan 103 by a resin or the like to facilitate an assembly and a handling of the air condition apparatus 100 for the vehicle.

In addition, a pipe conduit 152 of a downstream side is formed to have a same diameter and material with the pipe conduit 151 of the upstream side. One end thereof is connected to an air discharge opening 161b of the electrified fine particulate water generation device 106 (see FIG. 7A). Another end thereof is connected to a mounting provided in a side surface of a midway part of the side vent duct 141.

Then, as illustrated in FIG. 7A and FIG. 7B, the electrified fine particulate water generation device 106 used for the air conditioning apparatus 1 for the vehicle according to the third embodiment includes a lower side case 160a of a shallow lengthy box shape, an upper side case 160b of a shallow lengthy box shape fitted to the lower side case 160, a circuit storage part 163 disposed in an internal part of the lower side case 160a that houses circuits for control use and an electrified fine particulate water generation part 164 that generates electrified fine particulate water disposed in the same way in the internal part of the lower side case 160b.

The upper side case 160b is made of a resin or the like. In a vicinity of electrified fine particulate water generation part 164 of the internal part of the lower side case 160a, the upper side case 160b includes a cylindrical shaped air intake opening 161a in connection with the pipe conduit 151 of the upstream side connected to the wind propelling path 133 and a cylindrical shaped air discharge opening 161b in connection with the pipe conduit 152 of the downstream side connected to the side vent duct 141.

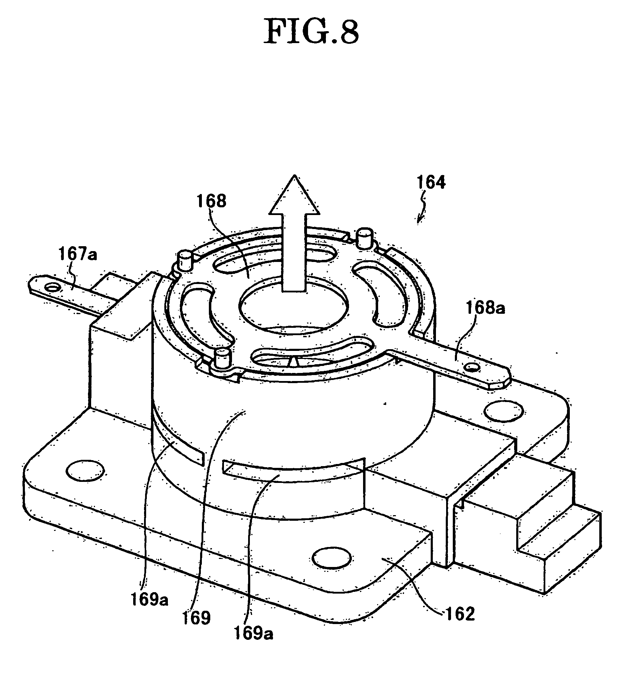

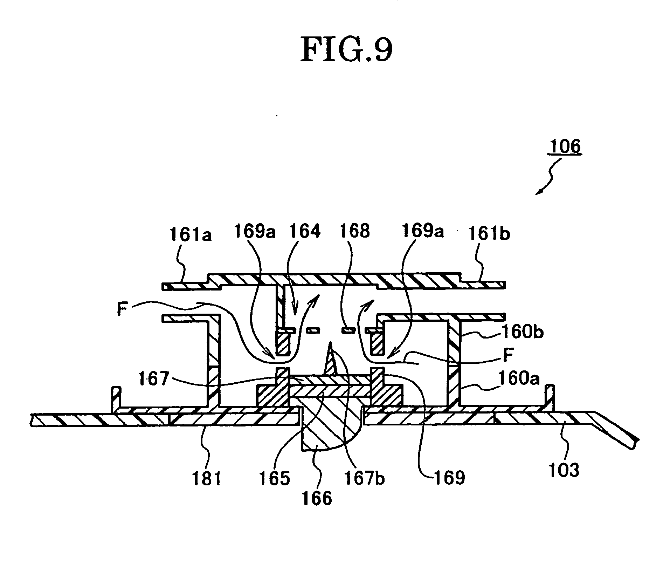

As illustrated in FIG. 8 and FIG. 9, the electrified fine particulate water generation part 164 includes a tube part 169 made of a resin or the like and constituting a main body, a mounting part 162 to the lower side case 160a disposed in a lower part of the tube part 169 integrally with the tube part 169, a fine pore 169a and etc. for air intake disposed in a side surface of the tube part 169, a negative electrode 167 of an internal part of the tube part, a water carrier part 167b disposed on the negative electrode 167 to protrude therefrom and a plus electrode 168 mounted on an upper end of the tube part 169.

The tube part 169 is formed into a cylindrical shape and made of a resin or the like. Fine pores 169a, etc. are disposed consecutively in a circumferential direction with a proper interval in a side surface of the tube part 169. The tube part 169 is formed to be able to incorporate therein air from the air intake opening 161a at a proper wind velocity and a proper wind quantity.

In addition, the negative electrode 167 is formed to have a disk shape made of a metal of aluminum or the like with an external circumference surface thereof fitted to an internal circumference surface of the tube part 169.

In addition, the water carrier part 167b is formed to have a conical shape and made of a multi-porous material of ceramic or the like so that the condensed or bedewed water moves to a tip edge by capillarity and is disposed in a center of the negative electrode 167 to protrude therefrom so that a sufficient distance is maintained for insulation from the tube part 169 encircling a periphery.

Furthermore, the plus electrode 168, as illustrated in FIG. 8, is formed to a plate shape by metals or the like and is worked to have a circular ring shape with concentric circle shaped holes disposed therein.

As illustrated in FIG. 9, in the electrified fine particulate water generation device 106 used for the air conditioning apparatus 1 for the vehicle of the present embodiment, a Peltier device 165 that comes into contact with a back surface of the negative electrode 167 is disposed as a thermoelectric conversion device. A heat releasing fin 66 is mounted to a back surface of the Peltier device 165.

The Peltier device 165 is formed to a plate shape by joining two kinds of metals. The Peltier device 165 is a plate shaped semiconductor device that utilizes a Peltier effect in which heat moves from one metal to the other when electrical current is applied to a joining part of the two kinds of metals. In the present embodiment, a side that comes into contact with the negative electrode 167 becomes a heat absorbing part, another side that comes into contact with the heat releasing fin 166 becomes a heat releasing part.

In addition, the heat releasing fin 166 is formed by metals of aluminum or the like. As illustrated in FIG. 10B, a plurality of thin plate shaped blades are disposed to be approximately parallel on one side of the plate shaped base part to protrude therefrom so that a surface area becomes large. Thereby the heat releasing fin 166 is formed to be able to perform heat exchange efficiently and protrude from an inner wall surface of the internal and external air introduction part 134 of an upstream side of the fan 103.

At this moment, as illustrated in FIG. 9, FIG. 10A and FIG. 10B, the electrified fine particulate water generation device 106 is mounted to an external surface of an opening and closing lid 181 used for a replacement of the filter 132, the heat releasing fin 166 is inserted to pass through a hole disposed on the opening and closing lid 181 so that together with engaging pieces 181a and 181a disposed on the opening and closing lid 181, the filter 132 is stopped in an engaged state.

Next, operations of the air conditioning apparatus 100 for the vehicle according to the above described third embodiment are described.

In the air conditioning apparatus 100 for the vehicle configured as described above, as illustrated in FIG. 6 and FIG. 11, the pipe conduit 151 of the upstream side is connected as a circuitous pipe conduit to the side surface of the wind propelling path 133. The pipe conduit 151 of the upstream side is also connected to the side vent duct 141 via the electrified fine particulate water generation device 106 and the pipe conduit 152 of the downstream side.

Therefore, it is not necessary to dispose an exclusive blast fan to the electrified fine particulate water generation device 100. However, a wind quantity and a wind velocity sufficient for generating electrified fine particulate water can be obtained.

That is, the wind propelling path 133 is disposed adjacent to a wind propelling blade 130 and etc. of the fan 103 for wind propelling use against the air conditioning unit 102. Therefore, the wind propelling path 133 has a high static pressure. By connecting the pipe conduit 151 of the upstream side to the wind propelling path 133, a pressure gradient between the side vent duct 141 connected to an end thereof and the wind propelling path 133 becomes large.

That is, the side vent duct 141 is connected to the vehicle room interior with an approximately same static pressure with an atmosphere pressure. In comparison, a static pressure of the wind propelling path 133 situated at the downstream side of the wind propelling blade 130 and etc. is extremely large. Therefore, by the pressure gradient between the both points, air flows from the wind propelling path 133 to the side vent duct 141.

Air flowing from the wind propelling path 133 to the pipe conduit 151 of the upstream side flows into the air intake opening 161a of the electrified fine particulate water generation device 106.

Next, as illustrated in FIG. 9, air flowed into the air intake opening 161a further flows into the electrified fine particulate water generation part 164 through the fine pores 169a and etc. disposed on the tube part 169.

At this moment, wind velocity can be further raised if the air passes through the fine pores 169a with a cross sectional area smaller than the pipe conduit 151 of the upstream side and the air intake opening 161a.

The air having flowed into the electrostatic minute water generation part 164 with raised wind velocity passes through the internal part of the tube part 169 and is determined to pass through a periphery of the plus electrode 168 mounted on an upper edge of the tube part 169. At this moment, electrified fine particulate water sprayed in a mist state is contained between the water carrier part 167b and the plus electrode 168.

Because the wind velocity passing through is fast, the passing air does not stay or back flow, electrified fine particulate water M sprayed in a mist state from the water carrier part 167b can be efficiently attracted.

Hereby a generation mechanism of the electrified fine particulate water is approximately described.

First, by being energized by the Peltier device 165, a face of the Peltier device 165 facing the negative electrode 167 is cooled so that the negative electrode 167 coming into contact with the Peltier device 165 is cooled. As a result, bedewing water is generated on the surface of the negative electrode 167.

Next, the bedewing water is carried by capillarity from an elementary part to a tip edge part of the water carrier part 167b disposed on the negative electrode 167 to be projected therefrom.

In addition, bedewing water carried to the tip edge part of the water carrier part 167b becomes the electrified fine particulate water sprayed towards the plus electrode 168 from a sharp tip edge part of the water carrier part 167b by a high voltage impressed between the negative electrode 167 and the plus electrode 168.

In addition, in order to generate the bedewed water, heat release is performed by the heat releasing fin 166 disposed to come into contact with a back surface of the Peltier device 165. As illustrated in FIG. 10, the heat releasing fin 166 protrudes from a wall surface of the internal and external air introduction part 134 connected to the wind propelling blade 130 and etc. of the fan 103. Therefore, it is not necessary to dispose an exclusive blast fan.

That is, in an internal part of the fan 103, the wind propelling blade 130 and etc. rotates so that a static pressure is lowered in a vicinity of an upstream side of the wind propelling blade 130 and etc. in comparison to a periphery thereof. Internal air 135 and external air 136 are introduced through the internal and external air introduction part 134 but by disposing the heat releasing fin 166 in a midway part of the introductory path, a wind quantity and a wind velocity necessary for cooling the heat releasing fin 166 can be obtained.

That is, because the heat releasing fin 166 is projected from an internal wall surface of the internal and external air introduction part 134, a sufficient wind quantity can be wind propelled to the heat releasing fin 166 so that air does not stay or back flow and heat release can be performed efficiently.

By cooling the heat releasing fin 166, through a heat releasing surface of the Peltier device 165 that comes into contact with a front surface side of the heat releasing fin 166, heat release of the Peltier device 165 is facilitated and heat exchange can be performed efficiently.

Air containing electrified fine particulate water in the above described manner is discharged to the pipe conduit 152 of a downstream side and further discharged to a side vent duct 141 through the pipe conduit 152 of the downstream side.

Air discharged to the side vent duct 141 is eventually discharged into the vehicle room so that interior of the vehicle room can be sterile filtrated and odor eliminated.

As described above, the air conditioning apparatus 100 for the vehicle according to the third embodiment does not require an exclusive blast fan but a wind quantity and a wind velocity sufficient to discharge the electrified fine particulate water can be obtained.

That is, a wind propelling path 133 with an extremely high static pressure is connected to a circuitous pipe conduit, that is, a pipe conduit 151 of the upstream side. By a pressure gradient of the side vent duct 141, a wind quantity and a wind velocity can be made larger.

In this case, a static pressure of the wind propelling path 133 that comes into close contact with the fan 103 is large. Therefore, a predetermined wind quantity and wind velocity can be obtained whatever an operating mode of the air conditioning apparatus 100 for the vehicle.

For example, in the case the operating mode of the air conditioning apparatus 100 for the vehicle is constituted to three stages of Hi, Mid and Low, in the case when the operating mode is Low, a wind quantity and a wind velocity sufficient for the generation of the electrified fine particulate water can be obtained.

In addition, in the third embodiment, as illustrated in FIG. 6, by disposing the electrified fine particulate water generation device 106 in a midpoint of a straight line connecting the wind propelling path 133 and the side vent duct 141, a distance between the wind propelling path 133 and the side vent duct 141 becomes short so that damages of a static pressure obtained at the wind propelling path 133 can be made smaller and a pressure gradient can be made larger.

In addition, because the electrified fine particulate water generation device 106 and the side vent duct 141 are disposed to come into close contact, a distance until the generated electrified fine particulate water is discharged into the vehicle room becomes short so that an attenuation quantity of the electrified fine particulate water due to time lapse becomes small.

In addition, the air containing electrified fine particulate water, even in the case when the air conditioning apparatus 100 for the vehicle is operated at a wind propelling pattern that does not use the side vent duct 141, is blown out slightly from a grill. In this case also, by connecting the circuitous pipe conduit 152 to the side vent duct 141 situated at both ends of an instrument panel, vehicle occupants are not blown directly so that sense of discomfort provided to the vehicle occupants is small.

As described above, because generated electrified fine particulate water can be efficiently guided into a vehicle room, sterile filtration and odor elimination can be performed efficiently in the interior of the vehicle room by the electrified fine particulate water.

### [Fourth Embodiment]

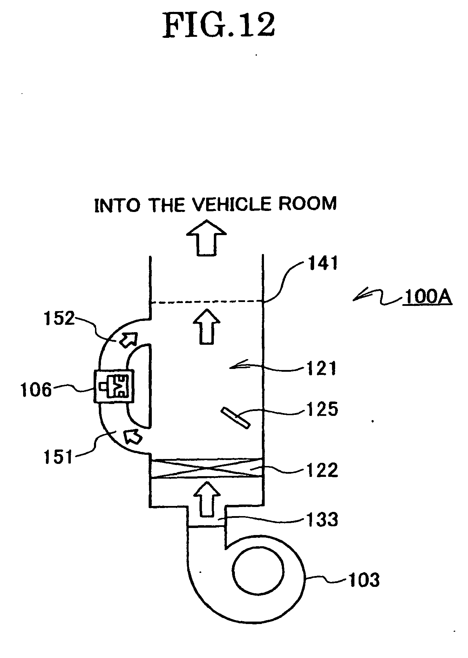

Hereinafter, with reference to FIG. 12, the air conditioning apparatus for the vehicle according to the fourth embodiment of the present invention is described.

In addition, for the air conditioning apparatus for the vehicle according to the fourth embodiment, descriptions of parts uniform or the same to the air conditioning apparatus for the vehicle of the third embodiment are made with the same reference numerals.

The air conditioning apparatus 100A according to the fourth embodiment differs from a state of the third embodiment and includes a pipe conduit 151 of an upstream side and a pipe conduit 152 of a downstream side that connect an upstream side and a downstream side within a mix chamber 121 of an air conditioning unit 102.

First, with reference to FIG. 12, the air conditioning apparatus 100A for the vehicle includes a fan 103, an air conditioning unit 102 including a heat exchanger that heats and cools air wind propelled from the fan 103, a side vent duct 141 that discharges into the vehicle room air heated and cooled at the air conditioning unit 102.

In the air conditioning apparatus 100A for the vehicle of the present embodiment, the pipe conduit 151 of the upstream side is disposed in an upstream side within the mix chamber 121 of the air conditioning unit 102. The pipe conduit 151 of the upstream side is connected to a downstream side within the same mix chamber 121 via an electrified fine particulate water generation device 106 and the pipe conduit 152 of the downstream side.

With such a constitution, an exclusive blast fan is not used. Regardless of whichever of the operating mode of the air conditioning apparatus 100A for the vehicle, electrified fine particulate water can be guided into the vehicle room.

That is, via a wind propelling path 133 connected to a wind propelling blade 130 and etc., the air guided into the air conditioning unit 102 maintains a large static pressure in an upstream side of the mix chamber 121 of the air conditioning unit 102.

On the other hand, a downstream side of the mix chamber 121 is connected to a side vent duct 141 and has a same static pressure with an atmosphere pressure.

Therefore, by a pressure gradient between these two points, a wind quantity and a wind velocity necessary to generate the electrified fine particulate water can be obtained.

In this case, a static pressure of an upstream side of the mix chamber 121 is large. Therefore, whichever the case of an operating mode of the air conditioning apparatus 100A for the vehicle, a necessary wind quantity and wind velocity can be obtained.

In the air conditioning apparatus for the vehicle according to the present invention constituted as such, a housing part is attached to an opening part disposed in a wall surface of the duct. An electrified fine particulate water generation part of the electrified fine particulate water generation device is disposed in an internal part of the housing part.

The housing part includes an intake opening and a discharge opening connected to an upstream side and a downstream side of the duct. Therefore, air flow and pressure differences thereof can be utilized. In addition, an exclusive blast fan is not disposed but electrified fine particulate water can discharged into an internal part of the duct.

The housing part disposed with the electrified fine particulate water generation part is attached to an opening part of the duct so that an electrified fine particulate water generation device can be installed easily.

Preferably, the electrified fine particulate water generation part is disposed in the circuitous path connecting the intake opening and the discharge opening. A heat releasing fin is disposed in an internal part of the duct. Therefore, an exclusive blast fan is not disposed. However, by air flowing in the internal part of the duct, the heat releasing fin can be cooled efficiently.

Preferably, in the air conditioning apparatus for the vehicle of another embodiment, air flowing in the internal part of the duct is taken in from an intake opening so that a current is formed in the Venturi path. On the other hand, air is taken in from a part other than the opening part of the duct. The air is made to flow into a generation path disposed with the electrified fine particulate water generation part and a heat releasing path disposed with the heat releasing fin.

In addition, by connecting the Venturi path to the generation path, without being largely affected by a wind velocity and a static pressure of an internal part of the duct, an air flow of a quantity necessary for discharging the electrified fine particulate water can be formed.

In addition, when air that flows into the generation path and the heat releasing path is secured from a part other than the opening part of the duct, a wind velocity and a static pressure of an internal part of the duct is not largely affected. However, an air flow of a quantity necessary for discharging the electrified fine particulate water can be formed.

Preferably, the air conditioning apparatus for the vehicle of the present invention constituted as such is connected to a circuitous pipe conduit in connection with the duct at a high static pressure generation part of the fan. The electrified fine particulate water generation part is disposed in the circuitous pipe conduit.

Therefore, an exclusive blast fan is not disposed but the electrified fine particulate water can be discharged by a pressure gradient.

Preferably, a circuitous pipe conduit is connected to a vicinity of a wind propelling path in connection to a downstream side of the fan. A pressure force of a high static pressure generation part is utilized so that a necessary wind quantity can be possibly obtained.

A circuitous pipe conduit in connection to a downstream part of the mix chamber is connected to an upstream part of the mix chamber of the air conditioning unit. The electrified fine particulate water generation part is disposed in an internal part of the circuitous pipe conduit. Regardless of whichever of an operating mode is the air conditioning apparatus being operated, the electrified fine particulate water can be guided into an interior of the vehicle room.

A heat releasing fin of the thermal electric conversion device is preferably configured to be protruded from an internal wall surface of an internal and external air introduction part of an upstream side of the fan so that an exclusive blast fan is not used but the heat releasing fin can be possibly cooled.

As described above, with reference to the drawings, a preferred embodiment of the present invention is described in detail. However, the present invention is not limited to these embodiments. It is noted that various modifications and changes can be made to these embodiments.

For example, in the above described third and fourth embodiments, a case is illustrated in which the heat releasing fin 166 of the thermal electric conversion device 165 is not disposed in the internal part of the circuitous path 151. However, it is not limited to such and the heat releasing fin can be disposed in the internal part of the circuitous path 151.

In addition, in the above described third and fourth embodiments, a case is illustrated in which the circuitous pipe conduit 151 is mounted on a side surface of the wind propelling path 133. But it is not limited to such and the same operational effects can be obtained if it is a wind propelling path 133 in a vicinity of the wind propelling blade 30 and etc. even when the wind propelling path 133 is mounted on an upper surface or a bottom surface or the like.

Furthermore, in the above described third and fourth embodiments, a case is illustrated in which the circuitous pipe conduit 151 is mounted to a hole disposed on a side surface of the wind propelling path 133. But it is not limited to such and the circuitous pipe conduit 151 can be mounted to a hole disposed in a compartment partitioned by a bulkhead in which the bulkhead is disposed in an internal part of the wind propelling path 133.

In the third and fourth embodiments, a case is illustrated in which the circuitous pipe conduit 151 is connected to the side vent duct 141. But it is not limited to such and the circuitous pipe conduit 151 can be connected to any duct of a center vent duct 142, a defroster duct and a foot duct or the like.

Furthermore, in the first and the second embodiments, a case is described in which the housing part 5 is attached to the side vent duct 41. However, it is not limited to such and a constitution can be adopted in which the housing part 5 is attached to a separate duct of the center vent duct 42 or the like.

In addition, in the first and the second embodiments, a case is described in which the aspirator 9 is connected to the generation path 84 and the heat releasing path 85 so that the air can be taken in from a part differing to the duct 4. However, it is not limited to such and a constitution can be adopted in which the air to be guided into is taken in from an intake opening for internal air and an intake opening for external air other than the part.

### [Industrial Applicability]

The air conditioning apparatus for the vehicle according to the present embodiment is used for a vehicle but can also be widely used as an air conditioning apparatus for a house or a factory.

## Claims

1. An air conditioning apparatus (1) for a vehicle, comprising:
an air conditioning unit (2) including a heat exchanger (21, 22),
a fan (3) that sends air to the air conditioning unit,
a duct (4, 41) that guides the air passing through the air conditioning unit into a vehicle room,
a housing part (5,8) attached to an opening part (4a, 41a) disposed in a wall surface of the duct, and
an electrified fine particulate water generation device (6, 106), wherein the electrified fine particulate water generation device includes an electrified fine particulate water generation part (61) that generates electrified fine particulate water, and
the electrified fine particulate water generation part (61, 164) is disposed in the housing (5, 8),
**characterized in that** :
the housing part (5, 8) includes an intake opening (52, 82, 151, 161a) connected to an upstream side of the opening part (4a, 41a) of the duct and a discharge opening (53, 83, 152, 161b) connected to a downstream side of the opening part of the duct (4, 41), and
the electrified fine particulate water generation part (61, 164) of the electrified fine particulate water generation device (6) is disposed in an internal part of the housing part (5, 8).

2. The air conditioning apparatus for the vehicle according to Claim 1,
wherein the electrified fine particulate water generation part (61) is disposed in a circuitous path (51, 151) connecting the intake opening (52, 161a) and the discharge opening (53, 161b),
wherein the electrified fine particulate water generation device (6) includes a thermal conversion device that supplies moisture content in the air to the electrified particulate water generation part;
wherein the thermal electric conversion device has a heat releasing fin (63, 166) disposed in an internal part of the duct.

3. The air conditioning apparatus for the vehicle according to Claim 1,
wherein the housing part includes a Venturi path (81) that connects the intake opening (82) and the discharge opening (83) via a throat part (81a), a generation path (84) that takes in air from a part differing to the opening part and a heat release path (85),
wherein the electrified fine particulate water generation part (61) is disposed in the generation path (84) with a downstream side thereof connected to a vicinity of a throat part (81a) of the Venturi path,
wherein the electrified fine particulate water generation device (6) includes a thermal electric conversion device that supplies moisture content in the air to the electrified fine particulate water generation part;
wherein the thermal electric conversion device has a heat releasing fin (63) disposed in the heat releasing path with a downstream side thereof connected to an internal part of the duct (4).

## Patentansprüche

1. Klimatisierungsvorrichtung (1) für ein Fahrzeug, die umfasst:
eine Klimatisierungseinheit (2), die einen Wärmetauscher (21, 22) enthält,
einen Ventilator (3), der die Luft zu der Klimatisierungseinheit schickt,
einen Kanal (4, 41), der die durch die Klimatisierungseinheit hindurchgehende Luft in einen Fahrzeugraum führt,
einen Gehäuseabschnitt (5, 8), der an einem Öffnungsabschnitt (4a, 41 a) befestigt ist, der in einer Wandfläche des Kanals angeordnet ist, und
eine Vorrichtung (6, 106) für die Erzeugung von elektrisch geladenen feinen Wasserpartikeln,
wobei die Vorrichtung für die Erzeugung von elektrisch geladenen feinen Wasserpartikeln einen Abschnitt (61) für die Erzeugung von elektrisch geladenen feinen Wasserpartikeln enthält, der elektrisch geladene feine Wasserpartikel erzeugt, und
der Abschnitt (61, 164) für die Erzeugung von elektrisch geladenen feinen Wasserpartikeln in dem Gehäuse (5, 8) angeordnet ist,
**dadurch gekennzeichnet, dass**:
der Gehäuseabschnitt (5, 8) eine Einlassöffnung (52, 82, 151, 161a), die mit einer stromaufwärts gelegenen Seite des Öffnungsabschnitts (4a, 41a) des Kanals verbunden ist, und eine Ablassöffnung (53, 83, 152, 161b), die mit einer stromabwärts gelegenen Seite des Öffnungsabschnitts des Kanals (4, 41) verbunden ist, enthält, und
der Abschnitt (61, 164) für die Erzeugung von elektrisch geladenen feinen Wasserpartikeln der Vorrichtung (6) für die Erzeugung von elektrisch geladenen feinen Wasserpartikeln in einem inneren Abschnitt des Gehäuseabschnitts (5, 8) angeordnet ist.

2. Klimatisierungsvorrichtung für ein Fahrzeug nach Anspruch 1,
wobei der Abschnitt (61) für die Erzeugung von elektrisch geladenen feinen Wasserpartikeln in einem herumgeführten Abschnitt (51, 151), der die Einlassöffnung (52, 161a) und die Ablassöffnung (53) verbindet, angeordnet ist,
wobei die Vorrichtung (6) für die Erzeugung von elektrisch geladenen feinen Wasserpartikeln eine Thermoumformungsvorrichtung enthält, die den Feuchtigkeitsgehalt in der Luft an den Erzeugungsabschnitt für elektrisch geladene feine Wasserpartikel liefert;
wobei die thermoelektrische Umformungsvorrichtung einen wärmeabgebenden Ventilator (63, 166) besitzt, der in einem inneren Abschnitt des Kanals angeordnet ist.

3. Klimatisierungsvorrichtung für ein Fahrzeug nach Anspruch 1,
wobei der Gehäuseabschnitt einen Venturi-Weg (81), der die Einlassöffnung (82) und die Ablassöffnung (83) über einen Verengungsabschnitt (81a) verbindet, und einen Erzeugungsweg (84), der die Luft von einem Abschnitt einlässt, der von dem Öffnungsabschnitt und einem Wärmeabgabeweg (85) verschieden ist, enthält,
wobei der Abschnitt (61) für die Erzeugung von elektrisch geladenen feinen Wasserpartikeln in dem Erzeugungsweg (84) angeordnet ist, wobei eine stromabwärts gelegene Seite hiervon mit einer Umgebung eines Verengungsabschnitts (81a) des Venturi-Wegs verbunden ist,
wobei die Vorrichtung (6) für die Erzeugung von elektrisch geladenen feinen Wasserpartikeln eine thermoelektrische Umformungsvorrichtung enthält, die den Feuchtigkeitsgehalt in der Luft an den Erzeugungsabschnitt für elektrisch geladene feine Wasserpartikel liefert;
wobei die thermoelektrische Umformungsvorrichtung einen wärmeabgebenden Ventilator (63) besitzt, der in dem Wärmeabgabeweg angeordnet ist, wobei eine stromabwärts gelegene Seite von ihm mit einem inneren Abschnitt des Kanals (4) verbunden ist.

## Revendications

1. Appareil de climatisation (1) pour un véhicule, comprenant :
une unité de climatisation (2) comprenant un échangeur de chaleur (21, 22)
un ventilateur (3) qui envoie de l'air à l'unité de climatisation,
un conduit (4, 41) qui guide l'air passant à travers l'unité de climatisation dans un habitacle de véhicule,
une partie de logement (5, 8) fixée à une partie d'ouverture (4a, 41a) disposée dans une surface de paroi du conduit, et
un dispositif de génération d'eau en fines particules électrifiées (6, 106),
dans lequel le dispositif de génération d'eau en fines particules électrifiées comprend une partie de génération d'eau en fines particules électrifiées (61) qui génère de l'eau en fines particules électrifiées, et
la partie de génération d'eau en fines particules électrifiées (61, 164) est disposée dans le logement (5, 8),
**caractérisé en ce que** :
la partie de logement (5, 8) comprend une ouverture d'admission (52, 82, 151, 161a) raccordée à un côté amont de la partie d'ouverture (4a, 41a) du conduit et une ouverture de refoulement (53, 83, 152, 161b) raccordée à un côté aval de la partie d'ouverture du conduit (4, 41), et
la partie de génération d'eau en fines particules électrifiées (61, 164) du dispositif de génération d'eau en fines particules électrifiées (6) est disposée dans une partie interne de la partie de logement (5, 8).

2. Appareil de climatisation pour le véhicule selon la revendication 1,
dans lequel la partie de génération d'eau en fines particules électrifiées (61) est disposée dans un chemin indirect (51, 151) raccordant l'ouverture d'admission (52, 161a) et l'ouverture de refoulement (53),
dans lequel le dispositif de génération d'eau en fines particules électrifiées (6) comprend un dispositif de conversion thermique qui fournit une teneur en humidité de l'air à la partie de génération d'eau en particules électrifiées ;
dans lequel le dispositif de conversion thermique électrique comporte une ailette de dégagement de chaleur (63, 166) disposée dans une partie interne du conduit.

3. Appareil de climatisation pour le véhicule selon la revendication 1,
dans lequel la partie de logement comprend un chemin venturi (81) qui raccorde l'ouverture d'admission (82) et l'ouverture de refoulement (83) via une partie de gorge (81a), un chemin de génération (84) qui amène de l'air depuis une partie différente vers la partie d'ouverture et un chemin de dégagement de chaleur (85),
dans lequel la partie de génération d'eau en fines particules électrifiées (61) est disposée dans le chemin de génération (84) dont un côté aval est raccordé à proximité d'une partie de gorge (81a) du chemin venturi,
dans lequel le dispositif de génération d'eau en fines particules électrifiées (6) comprend un dispositif de conversion électrique thermique qui fournit une teneur en humidité de l'air à la partie de génération d'eau en fines particules électrifiées ;
dans lequel le dispositif de conversion électrique thermique comporte une ailette de dégagement de chaleur (63) disposée dans le chemin de dégagement de chaleur dont un côté aval est connecté à une partie interne du conduit (4).
